# EUROPÄISCHE PATENTSCHRIFT

(11) **EP 0 687 630 B1**
(45) Veröffentlichungstag und Bekanntmachung des Hinweises auf die Patenterteilung: **25.08.1999**
(21) Anmeldenummer: 95108456.5
(22) Anmeldetag: 02.06.1995
(51) Int. Cl.: B65D 1/38, B29C 45/17, B65D 25/30

(54) **Im Spritzgiessverfahren hergestelltes Kunstoffteil**
Plastic part made by injection moulding
Article en matière plastique moulé par injection

(30) Priorität: 24.06.1994 DE 4421685; 13.10.1994 DE 4436641; 17.06.1994 DE 4421051; 22.11.1994 DE 9418484 U
(43) Veröffentlichungstag der Anmeldung: 20.12.1995
(73) Patentinhaber: Götz, Wilhelm, D-88410 Bad Wurzach (DE)
(72) Erfinder: Götz, Wilhelm, D-88410 Bad Wurzach (DE)
(74) Vertreter: Hutzelmann, Gerhard

(56) Entgegenhaltungen:
- EP-A- 0 484 763
- EP-A- 0 486 107
- EP-A- 0 603 531
- DE-A- 3 940 186
- DE-U- 9 418 484

## Beschreibung

Die Erfindung bezieht sich auf ein im Spritzgießverfahren hergestelltes Kunststoffteil, insbesondere Handgriff eines Flaschenkastens, mit einem durch Gaseinblasung erzeugten Hohlraum, mit wenigstens zwei übereinander angeordneten, im wesentlichen horizontal verlaufenden Hohlraumabschnitten, wobei der untere Hohlraumabschnitt die untere Begrenzung des Kunststoffteils darstellt.

Insbesondere beim Herstellen von Handgriffen ist es erwünscht, eine voluminöse Ausgestaltung zu erzielen, ohne dabei Materialanhäufungen zu erhalten. Es wurde daher unter anderem vorgeschlagen, diese Handgriffe hohl auszubilden. Aufgrund des erforderlichen großen Querschnitts entstehen auch große Hohlräume, was aber beim Abkühlen des Kunststoffes zu Schwierigkeiten führt.

Aus der EP-A-0 486 107 ist ein Handgriff eines Flaschenkastens in der genannten Art bekannt, wobei Hohlraumabschnitte vorgesehen sind, die durch Zwischenstege miteinander verbunden sind.

Der Erfindung liegt die Aufgabe zugrunde, ein Kunststoffteil der eingangs genannten Art vorzuschlagen, das gleichermaßen stabil und griffreundlich ist und bei dem Spannungsrisse und dergleichen vermieden werden.

Diese Aufgabe wird erfindungsgemäß dadurch gelöst, daß die übereinander liegendenden Hohlraumabschnitte durch einen Abschnitt aus massivem Material (masiver Steg) miteinander verbunden sind, welcher entlang seiner Erstreckung zwischen den Hohlraumabschnitten unterschiedliche Querschnitte aufweist, wobei der massive Steg in seinem Mittelabschnitt zwischen den beiden Hohlraum-Abschnitten am dünnsten ist und zu den beiden Hohlraum-Abschnitten hin stärker ausgebildet ist.

Somit sind oben und unten am Handgriff verhältnismäßig voluminöse Abschnitte angeordnet, die aber im Querschnitt noch so klein sind, daß beim Abkühlen des Kunststoffes keine Probleme entstehen, wobei gleichzeitig ein günstiger Übergang zwischen den Hohlraum-Abschnitten einerseits und dem massiven Steg andererseits gegeben.

Als sehr vorteilhaft hat es sich dabei ergeben, wenn gemäß einer vorteilhaften Ausgestaltung der Erfindung der Steg im Querschnitt gesehen an einer seiner beiden senkrechten Kanten im wesentlichen gerade verläuft und an seiner gegenüberliegenden Kante konkav ausgebildet ist.

Ebenfalls sehr vorteilhaft ist es, wenn gemaß einer vorteilhaften Weiterbildung der Erfindung die konkav ausgebildete Kante mit einem gleichbleibenden Krümmungsradius versehen ist.

Eine vorteilhafte Weiterbildung der Erfindung liegt auch darin, daß der Steg mit einer Nut versehen ist, die parallel zu den Hohlraum-Abschnitten verläuft, wobei die Nut durch ein messerförmiges, aus der Spritzform vorstehendes teil erzeugt wird.

Damit ist eine sichere Abtrennung der beiden Hohlräume voneinander gewährleistet, da sich das Kunststoffmaterial beim Spritzen entlang der Nut absetzt und damit die Verbindung zwischen den beiden Hohlräumen sicher verschließt.

Dabei ist es möglich, daß die Übergänge von der Nut zu den benachbarten Steg-Abschnitten abgerundet ausgebildet sind.

Damit ist eine einfache Reinigung der Nuten ermöglicht.

Erfindungsgemäß ist es jedoch auch möglich, daß die Nut am fertigen Kunststoffteil verschlossen ist, wobei das Verschließen im Anschluß an den Spritzvorgang durch Anschmelzen der sie umgebenden Kanten erfolgt.

Damit ist eine geschlossene Oberfläche erzielt, die grifffreundlich und leicht zu reinigen ist.

Eine besonders vorteilhafte Ausgestaltung der Erfindung liegt darin, daß die beiden übereinander liegenden Hohlräume an wenigstens einem Ende über einen vertikalen Kanal miteinander verbunden sind.

Die beiden Hohlräume können zwar auch getrennt bzw. parallel zueinander hergestellt werden; bei einer hintereinanderliegenden Anordnung ist jedoch nur eine enge Einlaßöffnung für das Druckgas und eventuell auch nur eine einzige Ablaßöffnung für durch das Gas verdrängtes Kunststoffmaterial nötig.

Bei einem als Flaschenkasten ausgebildeten Kunststoffteil mit zwei Schmalseiten und zwei Längsseiten, wobei an allen vier Seiten Handgriffe vorgesehen sind, ist es besonders vorteilhaft, wenn erfindungsgemäß jeweils zwei einander gegenüberliegende, an den Schmalseiten angeordnete Handgriffe mit zwei übereinander angeordneten Hohlräumen und einem dazwischen liegenden massiven Steg vorgesehen sind, während an den beiden Längsseiten Handgriffe vorgesehen sind, die eng aneinander angeordnete Hohlräume aufweisen, zwischen denen durch Nuten unterteilte Stege vorgesehen sind.

Durch diese kombinierte Anordnung werden bei den Hohlräumen jeweils optimale Verhältnisse für den Querschnitt im Verhältnis zur Hohlraumlänge ermöglicht.

Dabei ist es besonders vorteilhaft, wenn erfindungsgemäß, wenigstens die eng aneinander angeordneten Hohlräume in den Längsseiten-Handgriffen seitlich durch vertikale Kanäle miteinander verbunden sind.

Dadurch liegen die Hohlräume hintereinander und sind in einem Arbeitsgang herstellbar.

Sehr vorteilhaft ist es auch, wenn erfindungsgemäß die die Stege unterteilenden Nuten am fertigen Kunststoffteil verschlossen sind, wobei das Verschließen nach dem Spritzen des Flaschenkastens durch nochmaliges Anschmelzen des die Nut umgebenden Materials erfolgt.

Dadurch sind offene Spalte, in denen sich Schmutz ansammeln könnte wirksam vermieden.

Dabei hat es sich als vorteilhaft erwiesen, wenn erfindungsgemäß, an wenigstens einem der einander zugekehrten Bereiche der beiden Wandabschnitte eine Materialanhäufung vorgesehen ist.

Diese Materialanhäufung bewirkt dann beim Anschmelzen ein zuverlässiges Verschließen des zwischen den beiden Wandabschnitten gebildeten Spaltes.

Sehr günstig Ist es auch, wenn erfindungsgemäß an beiden einander zugekehrten Bereichen der beiden Wandabschnitte je eine von den Wandabschnitten weg gerichtete Materialanhäufung vorgesehen ist.

Eine weitere vorteilhafte Ausgestaltung der Erfindung liegt darin, daß die Materialanhäufung in einer im Wandbereich vorgesehenen Vertiefung vorgesehen ist.

Als sehr vorteilhaft hat es sich dabei ergeben, wenn erfindungsgemäß die Einleitstelle des gasförmigen Mediums an einem Ende eines der beiden Hohlräume vorgesehen ist, während die beiden von der Einleitstelle entfernten Enden der beiden Hohlräume miteinander verbunden sind.

Hierdurch werden die beiden mäanderförmig angeordneten Hohlräume nacheinander vom gasförmigen Medium durchströmt und dabei gebildet.

Erfindungsgemäß ist es jedoch auch möglich, daß die Einleitstelle des gasförmigen Mediums an oder in der Nähe der Verbindungsstelle der beiden Hohlräume vorgesehen ist.

Damit werden die beiden Hohlräume nahezu gleichzeitig vom gasförmigen Medium durchströmt und gebildet.

Eine vorteilhafte Ausgestaltung der Erfindung liegt darin, daß zum Bilden der Hohlraum-Abschnitte obere und untere Dickstellen vorgesehen sind, von denen die obere Dickstelle einen kleineren Querschnitt als die untere Dickstelle aufweist.

Damit wird eine besonders handfreundliche Anordnung erzielt, die eine sehr hohe Steifigkeit aufweist.

Bei dieser Ausgestaltung hat es sich als vorteilhaft erwiesen, wenn erfindungsgemäß die Einleitstelle für das gasförmige Medium im Bereich der dünneren Dickstelle und damit des im Querschnitt Kleineren Hohlraumes liegt.

Im Bereich der dickeren Dickstelle kühlt der Kunststoff langsamer ab als im Bereich der dünneren Dickstelle, weshalb das gasförmige Medium auch nach dem Durchströmen des dünneren Bereiches im dickeren Bereich immer noch ausreichend flüssigen Kunststoff vorfindet um das einwandfreie Bilden des Hohlraumes zu ermöglichen.

Eine sehr vorteilhafte Ausgestaltung der Erfindung liegt darin, daß die an die Hohlräume der Dickstellen anschließenden Dünnstellen in ihrem freien Querschnitt so ausgelegt sind, daß ein unbeabsichtigtes Durchtreten des gasförmigen Mediums ausgeschlossen ist.

Dadurch wird eine exakte Abgrenzung der Hohlräume auf den tatsächlich gewünschten Bereich erzielt.

Erfindungsgemäß hat es sich dabei als besonders vorteilhaft ergeben, wenn der freie Querschnitt der an Hohlräume anschließenden Dünnstellen eine lichte Weite von etwa 1,8 bis 2,0 mm aufweist.

Eine weitere vorteilhafte Ausgestaltung der Erfindung liegt darin, daß im Bereich der an die mit Hohlräumen versehenen Dickstellen anschließenden Dünnstellen in der Spritzform Materialien eingesetzt sind, welche eine besonders hohe Wärmeleitfähigkeit aufweisen.

Dadurch wird in diesem Bereich eine besonders rasche Abkühlung erreicht, wodurch der Kunststoff verhältnismäßig schnell soweit erstarrt, daß das gasförmige Medium hier nicht mehr ungewollt durchbrechen kann.

Eine weitere vorteilhafte Ausgestaltung der Erfindung liegt darin, daß die untere, mit einem Hohlraum versehene Dickstelle von den beiden Enden her bogenförmig nach unten verläuft.

Damit wird eine weitere Erhöhung der Steifigkeit und damit der Bruchfestigkeit des Flaschenkasten- Handgriffs erzielt.

Die Erfindung bezieht sich weiter auf ein Kunststoffteil, insbesondere einen Kunststoffkasten zum Transport von Getränkeflaschen mit wenigstens einer Grifföffnung und einem darüber angeordneten Handgriff, der durch gleichzeitiges Einspritzen von flüssigem Kunststoff von beiden Enden her gebildet wird.

Beim Spritzen des Handgriffs treffen sich die beiden Materialströme in der Mitte des Handgriffs wobei im allgemeinen keine innige Verbindung des Materials aus beiden Strömen erfolgt, sondern in diesem Bereich eine Schwachstelle entsteht, die insbesondere bei längerem Gebrauch des Kastens zum Bruch führt.

Erfindungsgemäß wird dieses Problem dadurch gelöst, daß die beiden Strömungskanäle zum Einleiten des Kunststoffes in den Handgriff unterschiedliche freie Querschnitte aufweisen.

Dadurch wird das Zusammentreffen der beiden Materialströme aus dem hochbelasteten Mittelbereich in einen Randbereich des Handgriffs verschoben, wodurch die Bruchgefahr erheblich gemindert ist.

Eine besonders vorteilhafte Ausgestaltung der Erfindung liegt darin, daß der Handgriff zwei übereinander liegende Dickstellenbereiche aufweist, die sich jeweils über den gesamten Handgriff erstrecken und die beide von den beiden Enden des Handgriffs her mit flüssigem Kunststoff versorgt werden, und daß die Strömungskanäle der beiden Dickstellenbereiche mit unterschiedlichen freien Querschnitten versehen sind.

Dadurch werden die Stellen des Zusammentreffens der beiden Materialströme in beiden Dickstellenbereichen seitlich auseinandergezogen, wodurch die Bruchgefahr nahezu ausgeschlossen ist.

Als sehr vorteilhaft hat es sich dabei auch erwiesen, wenn erfindungsgemäß die unterschiedlichen freien Querschnitte bei den beiden Dickstellenbereichen auf unterschiedlichen Seiten des Handgriffs vorgesehen sind.

Damit sind beide Zusammentreffstellen der Materialströme aus dem Mittelbereich des Handgriffs nach außen verschoben und zwar in beiden Dickstellenbereichen nach unterschiedlichen Seiten. Die Bruchgefahr ist damit völlig ausgeschlossen.

Dieses Verschieben der Zusammentreffstelle aus dem Mittelbereich hat sich erfindungsgemäß auch bei einem Handgriff mit einem durch Gasinjection gebildeten Hohlraum, der sich über wenigstens annähernd die gesamte Länge des Handgriffs erstreckt, sehr bewährt.

Bei einem Kunststoffteil mit zwei übereinander angeordneten Dickstellenbereichen im Handgriff, ist es sehr vorteilhaft, wenn wenigstens einer der beiden Dickstellenbereiche mit einem durch Gasinjection erzeugten Hohlraum versehen ist, wobei in beiden Dickstellenbereichen die Zusammentreffstellen der Materialströme gegeneinander verschoben sind.

Für die Herstellung hat es sich als sehr günstig erwiesen, wenn Entlüftungsöffnungen in der Spritzform vorgesehen sind, die vorzugsweise entsprechend den Zusammentreffstellen der Materialströme zueinander versetzt angeordnet sind.

Bei zwei übereinander liegenden Dickstellenbereich mit oder ohne durch Gasinjection erzeugtem Hohlraum sind zweckmäßigerweise entsprechende Entlüftungsöffnungen für jeden der Dickstellenbereiche vorgesehen, wobei diese Entlüftungsöffnungen auch versetzt zueinander angeordnet sein können.

Bei der Herstellung des Kunststoffteils hat es sich als sehr vorteilhaft erwiesen, wenn erfindungsgemäß während der Abkühlphase des Kunststoffes und der damit einhergehenden Schrumpfung des Kunststoffes weiteres gasförmiges Medium eingepreßt wird, um den Schrumpf auszugleichen.

Damit werden von außen sichtbare Einfallstellen im Kunststoff sicher vermieden.

Als sehr vorteilhaft hat es sich dabei auch ergeben, wenn der Gasdruck während nahezu der gesamten Abkühlphase des Kunststoffes aufrechterhalten wird.

Dadurch kann der im Kunststoff eintretende Schrumpf ohne weiteres ausgeglichen werden.

In der Zeichnung ist die Erfindung anhand mehrerer Ausführungsbeispiele veranschaulicht. Dabei zeigen:
- Fig.1: eine teilweise abgebrochene Schnittdarstellung durch einen Flaschenkasten und einen an dessen Schmalseite angeordneten Handgriff,
- Fig.2: einen ähnlich ausgestalteten Schmalseiten-Handgriff ebenfalls im Schnitt und im größeren Maßstab,
- Fig.3: einen Schnitt durch einen an der Längsseite des Flaschenkastens angeordneten weiteren Handgriff,
- Fig.4: einen Schnitt durch eine weitere Variante eines Längsseiten-Handgriffs.
- Fig.5: einen vertikalen Querschnitt durch einen Handgriff eines Flaschenkastens, mit drei übereinanderliegenden Hohlraumabschnitten und dazwischen liegenden zweiteiligen Wandabschnitten,
- Fig.6: einen Ausschnitt gemäß Fig.5 mit einer an einem Wandabschnitt angeordneten Materialanhäufung in Form einer vom Handgriff weggerichteten Materialspitze,
- Fig.7: ein weiteres Beispiel für Materialanhäufungen an den Wandabschnitten,
- Fig.8: ein drittes Ausführungsbeispiel für eine Materialanhäufung,
- Fig.9: einen Vertikalschnitt durch einen Flaschenkasten in Längsrichtung,
- Fig.10: einen weiteren Vertikalschnitt durch den Flaschenkasten in Querrichtung,
- Fig.11: einen teilweise aufgeschnittenen Flaschenkasten mit zwei übereinander angeordneten Dickstellenbereichen, die durch Gasinjection hohl ausgebildet sind und
- Fig.12: einen Schnitt durch einen weiteren Flaschenkasten mit nur einem Dickstellenbereich an der Unterseite des Handgriffs.

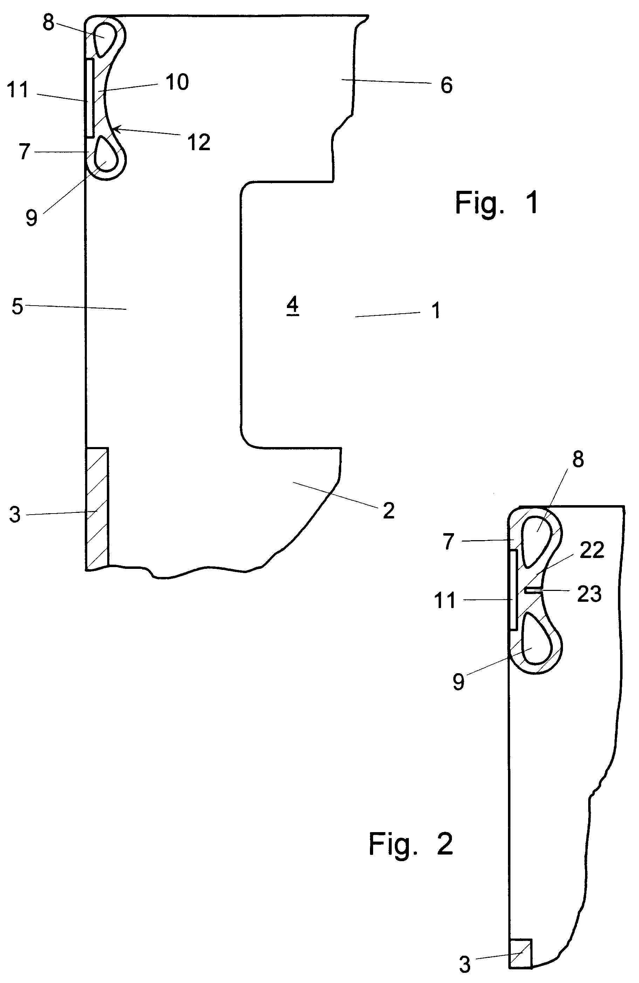

Mit 1 ist in Fig.1 ein Flaschenkasten bezeichnet, von dessen nicht dargestelltem Boden vier Seitenwände aufragen und zwar zwei Längsseiten-Wände 2 und zwei Schmalseiten-Wände 3. In jeder dieser vier Wände ist eine Grifföffnung 4 bzw. 5 vorgesehen, die oben von einem Handgriff 6 bzw. 7 abgeschlossen ist. Der in Fig.1 im Vertikalschnitt dargestellte Handgriff 7 in der Schmalseiten-Wand 3 weist oben und unten je einen Hohlraum 8,9 auf, die durch einen massiven Steg 10 miteinander verbunden sind. An der Außenseite dieses Steges 10 ist eine Einbuchtung 11 vorgesehen, die beispielsweise zur Aufnahme eines Etikettes oder eines Aufdruckes dient. Die innere Kante 12 des Steges 10 ist konkav ausgebildet, mit einem gleichbleibenden Radius, wobei die im Mittelabschnitt verbleibende Materialstärke verhältnismäßig gering ist. Die beiden Hohlräume 8,9 können als Einzelkanäle hergestellt sein, es ist jedoch auch möglich, beide Kanäle hintereinander anzuordnet, wozu sie an einem Ende durch einen nicht dargestellten vertikal verlaufenden Kanal verbunden sind. Durch die verhältnismäßig dünne Ausgestaltung des Steges 10 setzt sich beim Spritzen des Kastens an dieser Stelle sofort Kunststoffmaterial ab, so daß keine unbeabsichtigte Verbindung der beiden Hohlräume entlang ihrer Längserstreckung entstehen kann.

Wird dagegen ein etwas dickerer Steg vorgesehen, so ist es zweckmäßig, den Steg 22 durch eine Nut 23 zu unterteilen, so daß auch hier die unbeabsichtigte Verbindung der beiden Hohlräume 8 und 9 entlang ihrer Längserstreckung mit Sicherheit ausgeschlossen ist.

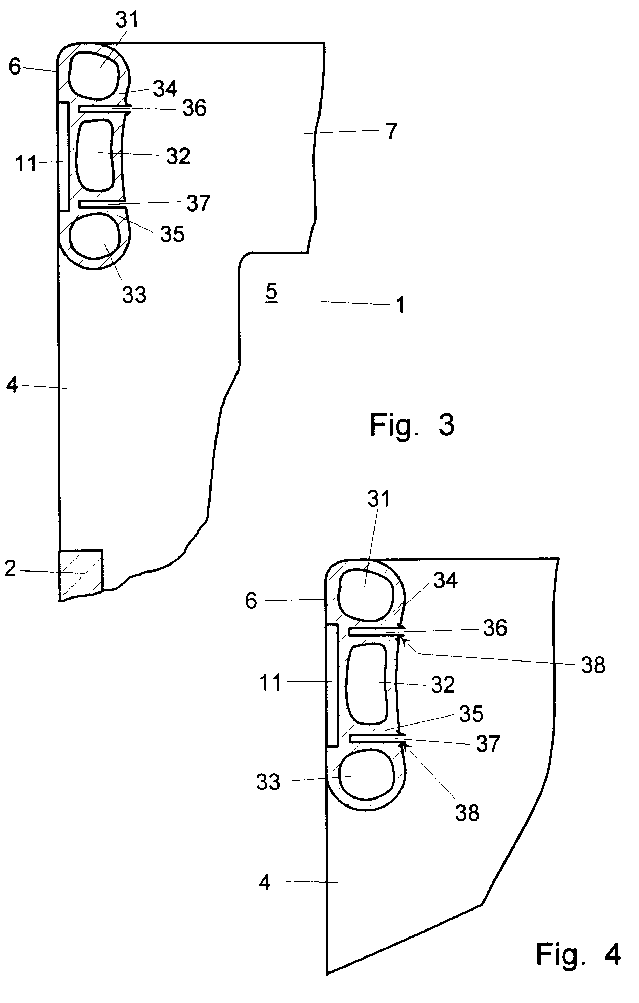

Die Längsseiten-Wand 2 ist mit einem Handgriff 6 versehen, der in Fig.3 im Vertikalschnitt dargestellt ist. Er weist drei übereinander liegende Hohlräume 31, 32 und 33 auf, die durch massive Stege 34 bzw. 35 voneinander getrennt sind. An ihren Enden sind diese Hohlräume 31,32,33 jedoch abwechselnd miteinander verbunden, so daß eine mäanderförmige Anordnung vorliegt. Um sicherzustellen, daß sich beim Spritzen des Handgriffs 6 diese massiven Stege 34,35 ausbilden, sind dort durch entsprechende Werkzeugteile erzeugte Nuten 36 und 37 vorgesehen. Diese Nuten können entweder offen bleiben oder nachträglich durch Anschmelzen des sie umgebenden Materials der beiden Stege 34 und 35 verschlossen werden.

In Fig.4 ist ein Ausführungsbeispiel eines Handgriffs 6 dargestellt, bei dem an den Stegen 34 und 35 vertieft angeordnete Materialspitzen 38 angeformt sind.

Diese Materialspitzen 38 verlaufen über die gesamte Länge der Nuten 34 und 35 und werden im Anschluß an den Spritzvorgang durch gezielte Wärmezufuhr angeschmolzen, wobei sie die jeweilige Nut verschließen. Durch die vertiefte Anordnung der Materialspitzen wird dabei eine weitgehend ebene Oberfläche erzielt.

Entsprechende Materialspitzen können auch beim Steg 22 in Fig.2 vorgesehen werden. Es ist jedoch auch möglich, alle oder einen Teil der Nuten mit abgerundeten Kanten zu versehen und die Nuten dann offen zu lassen.

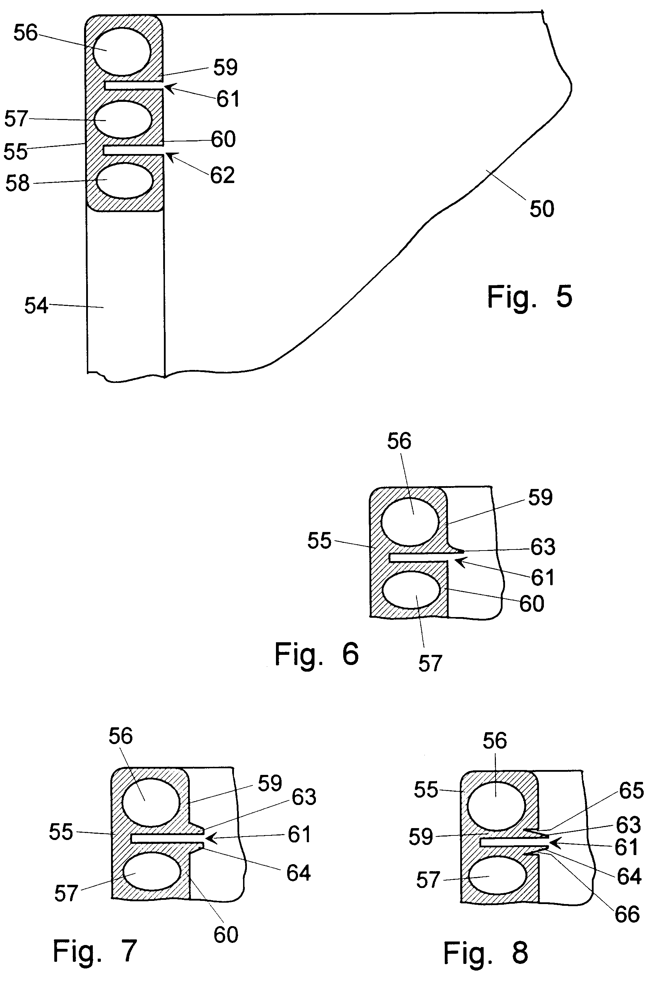

Mit 50 ist in Fig.5 ein teilweise dargestellter Flaschenkasten bezeichnet, der an allen vier Seitenwänden mit einer Grifföffnung 54 und jeweils einem darüber angeordneten Handgriff 55 versehen ist. Der Kasten ist mit Hilfe eines nicht dargestellten Werkzeuges im Spritzgießverfahren hergestellt, wobei in die Hohlräume des Werkzeuges flüssiger Kunststoff eingespritzt wurde. Innerhalb des Handgriffes 55 sind drei übereinander angeordnete Hohlraumabschnitte 56,57,58 angeordnet, die in nicht dargestellter Weise mäanderförmig an ihren jeweiligen seitlichen Enden miteinander verbunden sind. Zwischen diesen Hohlraumabschnitten 56,57,58 sind zwei jeweils zweiteilig ausgebildete Wandabschnitte 59 und 60 angeordnet. Jeder dieser Wandabschnitte 59 und 60 ist insich durch einen schmalen Spalt 61 bzw. 62 unterteilt, der nach der Fertigstellung durch nochmaliges örtliches Erwärmen bis über den Schmelzpunkt des Kunststoffes hinaus verschlossen werden kann.
Dazu kann wie in Fig.6 dargestellt an einem der benachbarten Bereiche der beiden Wandabschnitte eine Materialanhäufung 63 in Form einer vom Handgriff weg gerichteten Spitze vorgesehen sein, die beim nochmaligen Anschmelzen den Spalt verschließt.

Wie in Fig.7 dargestellt ist, können auch an beiden Wandabschnitten solche als Spitzen 63,64 ausgebildeten Materialanhäufungen vorgesehen.

Fig.8 zeigt ein Ausführungsbeispiel, bei dem die beiden als Spitzen ausgebildeten Materialanhäufungen 63,64 jeweils in einer Vertiefung 65,66 angeordnet sind. Damit wird beim anschließenden Anschmelzen der sich bildende Wulst zum Verschließen des Spaltes 61,62 etwas unter der Oberfläche der Wandabschnitte liegen und nicht stören.

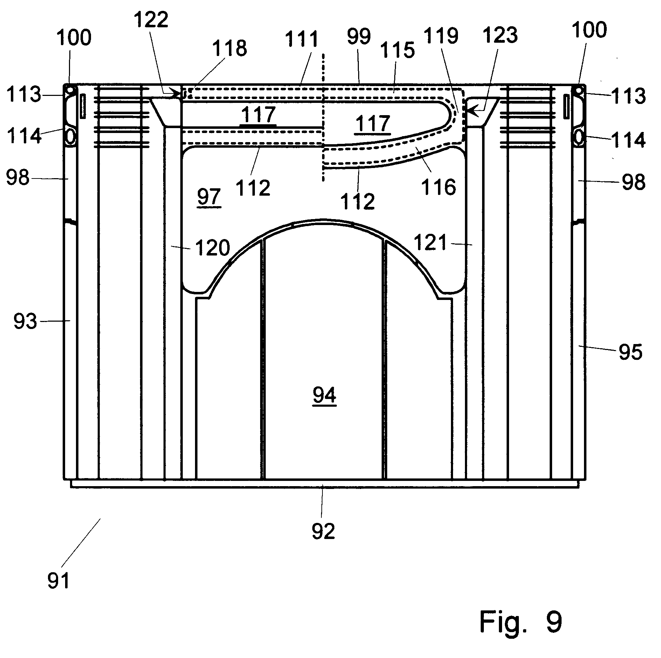

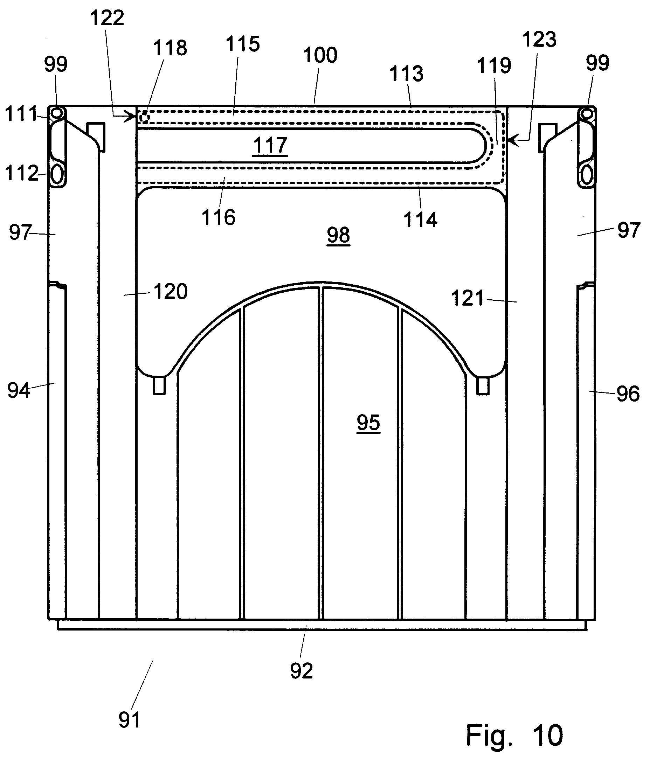

Mit 91 ist in den Figuren 9 und 10 ein Flaschenkasten bezeichnet, der einen Boden 92 und vier von diesem aufragende Wände 93,94,95,96 aufweist. In jeder der vier Wände ist eine Grifföffnung 97,98 ausgespart, die oben durch einen Handgriff 99,100 begrenzt ist. Jeder dieser vier Handgriffe weist zwei Dickstellen 111,112 bzw. 113,114 auf, in denen Hohlräume 115,116 vorgesehen sind, die weitgehend horizontal verlaufen und jeweils oben und unten am Handgriffrand im Abstand voneinander und im wesentlichen parallel zueinander angeordnet sind. Die an die Hohlräume 115,116 angrenzenden Dünnstellen-Bereiche 117 haben in ihrem freien Querschnitt eine lichte Weite von etwa 1,8 bis 2,0 mm. Die im Handgriff oben angeordnete Dickstelle 111,113 ist im Querschnitt etwas kleiner als die untere Dickstelle 112,114, wodurch auch die entsprechenden Hohlräume unterschiedlich groß sind. In der oberen Dickstelle 111,113 ist am einen Ende eine Einleitstelle 118 für ein gasförmiges Medium vorgesehen, während ihr davon abgewandtes Ende nach unten mit der unteren Dickstelle 112,114 verbunden ist (Verbindungskanal 119).
Das unter einem Druck von etwa 40 bis 50 bar eingeleitete gasförmige Medium drängt den vom Einspritzvorgang noch flüssigen Kunststoff nach außen und bildet einen Hohlraum 115, der sich längs der gesamten oberen Dickstelle 111,113 erstreckt. Dann gelangt das gasförmige Medium über die vertikale Verbindung 119 in die untere Dickstelle 112,114 und bildet auch dort einen entsprechenden Hohlraum 116.

Der Druck des gasförmigen Mediums wird dann aufrechterhalten, bis der Kunststoff erstarrt ist. Der beim Abkühlen des Kunststoffes eintretende Materialschwund wird dabei durch nachströmendes gasförmiges Medium ausgeglichen, so daß im fertig abgekühlten und ausgeformten Flaschenkasten 91 keine Schwundstellen sichtbar sind. Dadurch, daß die den beiden Hohlräumen 115,116 benachbarten Dünnstellen 117 besonders dünn ausgebildet sind, wird ein ungewolltes Durchbrechen des gasförmigen Mediums in diesen Bereich vermieden. In der Spritzform können in den Bereichen der angrenzenden Dünnstellen 117 Materialien vorgesehen sein, welche eine sehr gute Wärmeleitfähigkeit aufweisen und dadurch für eine schnelle Abkühlung des Kunststoffes in diesem Bereich sorgen.

Anstelle der Anordnung der Einleitstelle 118 für das gasförmige Medium am von der Verbindungsstelle 119 der beiden Hohlräume 115,116 abgewandten Ende des oberen Hohlraumes 115 ist es auch möglich, die Einleitstelle im Bereich der Verbindungsstelle 119 vorzusehen. Das gasförmige Medium strömt dann in beide Dickstellen 111,112 bzw. 113,114 nahezu gleichzeitig ein, wodurch auch beide Hohlräume 115,116 etwa zeitgleich gebildet werden.

Zur weiteren Versteifung des Handgriffes 99,100, insbesondere auf der Kastenlängsseite, die infolge der durch die Palettenstapelung erzwungenen geringen Stärke verhältnismäßig schwache Handgriffe aufweist, ist es möglich, die untere Dickstelle 112 mit dem darin enthaltenen Hohlraum 116 bogenförmig nach unten verlaufen zu lassen, wie dies in Fig.9 in der rechten Hälfte dargestellt ist.

Die Einleitstelle für das gasförmige Medium kann selbstverständlich auch innerhalb eines senkrechten, hohl ausgebildeten Holmes 120 bzw. 121 angeordnet sein. Die entsprechenden Stellen sind mit 122 und 123 bezeichnet; dabei ist im fertigen Kasten im Bereich der Handgriffe keine Öffnung sichtbar.

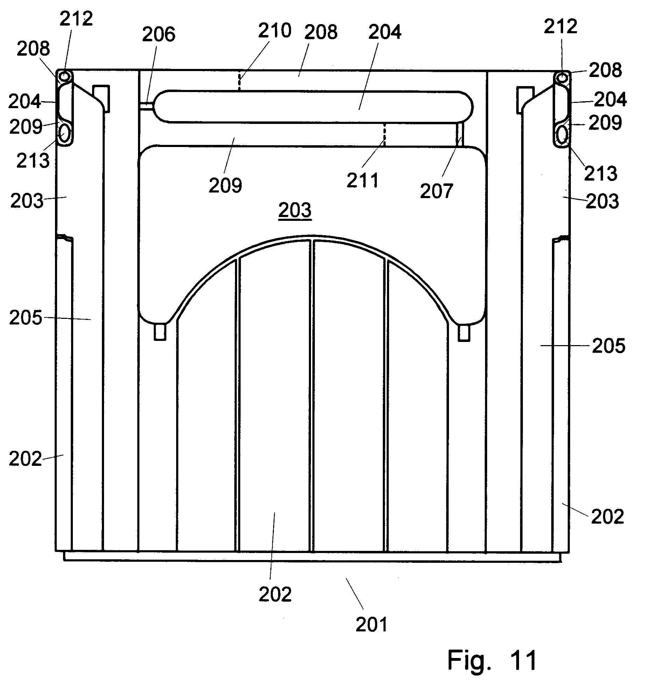

Mit 201 ist in Fig.11 ein Flaschenkasten bezeichnet, der in seinen vier Seitenwänden 202 jeweils mit einer Grifföffnung 203 ausgestattet ist, die an ihrer Oberseite durch einen Handgriff 204 abgeschlossen ist. Beim Spritzen des Flaschenkastens 201 wird der flüssige Kunststoff vom Boden her eingespritzt und über die Eckholme 205 den Handgriffen 204 zugeführt. Da der Kunststoff über die beiden einen Handgriff 204 begrenzenden Eckholme 205 gleichzeitig zugeführt wird, treffen sich die beiden Kunststoffströme innerhalb des Handgriffs 204, wobei allerdings durch den langen Strömungsweg bereits eine Abkühlung eingetreten ist und damit keine vollständige Vermischung der beiden Ströme stattfindet. Vielmehr legen sich die Enden der Kunststoffströme weitgehend nur aneinander an und ergeben dadurch zwangsläufig eine Schwachstelle, an welcher der Handgriff nach längerem Gebrauch des Flaschenkastens oder bei übermäßiger Belastung bricht. Am Übergang der Strömungskanäle von den Eckholmen 205 zum Handgriff sind deshalb Querschnittsverjüngungen 206 bzw. 207 vorgesehen, die unterschiedliche Strömungsgeschwindigkeiten erzwingen. Beim Ausführungsbeispiel nach Fig.11, bei welchem der Handgriff zwei übereinander angeordnete Dickstellenbereiche 208 und 209 aufweist, ist für den oberen Dickstellenbereich 208 am Übergang vom links dargestellten Eckholm 205 eine solche Querschnittsverjüngung 206 vorgesehen. Dadurch treffen die beiden Kunststoffströme an der mit 210 bezeichneten, links von der Mitte des Handgriffs liegenden Stelle zusammen. Beim unteren Dickstellenbereich 209 ist eine entsprechende Querschnittsverjüngung 207 am Übergang vom rechts liegenden Eckholm 205 zu diesem Dickstellenbereich 209 vorgesehen. Dadurch liegt die Zusammentreffstelle 211 der beiden Kunststoffströme rechts von der Mitte des Handgriffs 204. Die beiden Schwachstellen 210 und 211 im Bereich der Dickstellen sind dabei soweit gegeneinander versetzt, daß ein Brechen des Handgriffs durch diese Schwachstellen nicht mehr zu befürchten ist. Die beiden Dickstellenbereiche 208 und 209 sind zusätzlich durch Einleiten von Gas bzw. Druckluft jeweils mit einem Hohlraum 212 bzw. 213 versehen, was jedoch auf die Schwachstellen keinen Einfuß hat, aber ein Schrumpfen der Dickstellenbereiche beim Abkühlen des Kunststoffes wirksam verhindert.

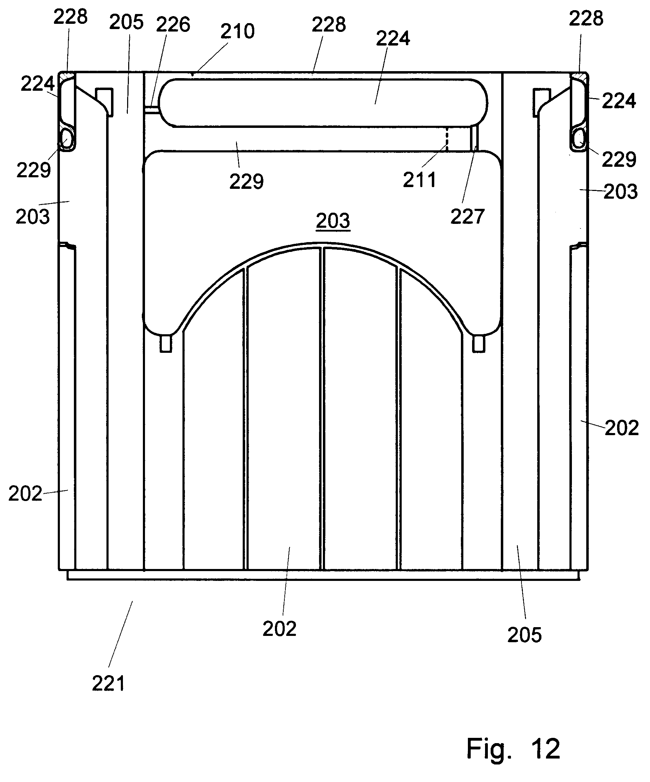

Beim Ausführungsbeispiel nach Fig.12 sind bei einem Flaschenkasten 221 jeweils vier Handgriffe 224 vorgesehen, die nur an ihrem unteren Ende mit einem Dickstellenbereich 229 ausgestattet sind, während ihr oberes Ende 228 winkelförmig ausgebildet ist. Hier ist es ausreichend, wenn auf einer Seite des Dickstellenbereiches 229 eine Querschnittsverjüngung 227 vorgesehen ist, um dadurch die Zusammentreffstelle 211 der beiden Kunststoffströme in den seitlichen Randbereich des Handgriffs zu verlegen. Damit ist die nicht zu vermeidende Schwachstelle in einen weniger belasteten Bereich verschoben, so daß keine vorzeitige Materialermüdung zu befürchten ist.

Zusätzlich kann jedoch auch im oberen, winkelförmig ausgebildeten Endbereich 228 eine Querschnittsverjüngung 226 vorgesehen werden, wodurch auch in diesem Bereich die Zusammentreffstelle 210 der beiden Kunststoffströme aus der Mitte verschoben wird. Damit kann eine weitere Erhöhung der Bruchfestigkeit des Handgriffs erzielt werden. Zur Unterstützung des Formens des Handgriffes ist die Spritzform in diesem Bereich jeweils mit einer nicht dargestellten Entlüftungsöffnung versehen. Diese Entlüftungsöffnung kann über die gesamte Länge des Handgriffs reichen; sie kann jedoch auch aus der Mitte des Handgriffs verschoben sein, um das Verschieben der Zusammentreffstelle der beiden Materialströme zu unterstützen.

## Patentansprüche

1. Im Spritzgießverfahren hergestelltes Kunststoffteil, insbesondere Handgriff(6,7,55,99,100,204,224) eines Flaschenkastens (1,50,91,201,221), mit einem durch Gaseinblasung erzeugten Hohlraum, mit wenigstens zwei übereinander angeordneten, im wesentlichen horizontal verlaufenden Hohlraumabschnitten (8,9,31,32,33,56,57,58,115,116,208,209,229), wobei der untere Hohlraumabschnitt die untere Begrenzung des Kunststoffteils darstellt, **dadurch gekennzeichnet**, daß die übereinander liegenden Hohlraumabschnitte durch einen Abschnitt aus massivem Material (massiver Steg) miteinander verbunden sind, welcher entlang seiner Erstreckung zwischen den Hohlraumabschnitten unterschiedliche Querschnitte aufweist, wobei der massive Steg(10,22,34,35,59,60,117) in seinem Mittelabschnitt zwischen den beiden Hohlraum-Abschnitten am dünnsten ist und zu den beiden Hohlraum-Abschnitten hin stärker ausgebildet ist.

2. Kunststoffteil nach Anspruch 1, **dadurch gekennzeichnet**, daß der Steg(10,22,117) im Querschnitt gesehen an einer seiner beiden senkrechten Kanten im wesentlichen gerade verläuft und an seiner gegenüberliegenden Kante(12) konkav ausgebildet ist.

3. Kunststoffteil nach Anspruch 2, **dadurch gekennzeichnet**, daß die konkav ausgebildete Kante(12) mit einem gleichbleibenden Krümmungsradius versehen ist.

4. Kunststoffteil nach einem der vorhergehenden Ansprüche, **dadurch gekennzeichnet**, daß der Steg(22,34,35,59,60) mit einer Nut(23,36,37,61,62) versehen ist, die parallel zu den HohlraumAbschnitten (8,9,31,32,33,56,57,58) verläuft, wobei die Nut durch ein messerförmiges, aus der Spritzform vorstehendes Teil erzeugt wird.

5. Kunststoffteil nach Anspruch 4, **dadurch gekennzeichnet**, daß die Übergänge von der Nut(23,37,61,62) zu den benachbarten Steg-Abschnitten abgerundet ausgebildet sind.

6. Kunststoffteil nach Anspruch 4, **dadurch gekennzeichnet**, daß die Nut(23,36,37,61,62) am fertigen Kunststoffteil verschlossen ist, wobei das Verschließen im Anschluß an den Spritzvorgang durch Anschmelzen der sie umgebenden Kanten erfolgt.

7. Kunststoffteil nach einem der Ansprüche 4, 5 oder 6, **dadurch gekennzeichnet**, daß die beiden übereinander liegenden Hohlräume(8,9,31,32,33,56,57,58,115,116,208,209) an wenigstens einem Ende über einen vertikalen Kanal miteinander verbunden sind.

8. Kunststoffteil nach einem der vorhergehenden Ansprüche, insbesondere Flaschenkasten mit zwei Schmalseiten und zwei Längsseiten, wobei an allen vier Seiten Handgriffe vorgesehen sind, **dadurch gekennzeichnet**, daß jeweils zwei einander gegenüberliegende, an den Schmalseiten angeordnete Handgriffe mit zwei übereinander angeordneten Hohlräumen(8,9) und einem dazwischen liegenden massiven Steg(10,22) vorgesehen sind, während an den beiden Längsseiten Handgriffe vorgesehen sind, die eng aneinander angeordnete Hohlräume(31,32,33) aufweisen, zwischen denen durch Nuten(36,37) unterteilte Stege(34,35) vorgesehen sind.

9. Kunststoffteil nach Anspruch 8, **dadurch gekennzeichnet**, daß wenigstens die eng aneinander angeordneten Hohlräume(31,32,33) in den Längsseiten-Handgriffen seitlich durch vertikale Kanäle miteinander verbunden sind.

10. Kunststoffteil nach Anspruch 8 oder 9, **dadurch gekennzeichnet**, daß die die Stege(22,34,35) unterteilenden Nuten(23,36,37) am fertigen Kunststoffteil verschlossen sind, wobei das Verschließen nach dem Spritzen des Flaschenkastens(1) durch nochmaliges Anschmelzen des die Nut umgebenden Materials erfolgt.

11. Kunststoffteil nach einem der vorhergehenden Ansprüche, **dadurch gekennzeichnet**, daß an wenigstens einem der einander zugekehrten, die Nut begrenzenden Bereiche der beiden Wandabschnitte(34,35,59,60) eine Materialanhäufung(38,63,64) vorgesehen ist.

12. Kunststoffteil nach Anspruch 11, **dadurch gekennzeichnet**, daß an beiden einander zugekehrten Bereichen der beiden Wandabschnitte(59,60) je eine von den Wandabschnitten weg gerichtete Materialanhäufung(63,64) vorgesehen ist.

13. Kunststoffteil nach Anspruch 11 oder 12, **dadurch gekennzeichnet**, daß die Materialanhäufung(63,64) in einer im Wandbereich vorgesehenen Vertiefung(65,66) vorgesehen ist.

14. Kunststoffteil nach einem der vorhergehenden Ansprüche, **dadurch gekennzeichnet**, daß die Einleitstelle(118,122) des gasförmigen Mediums an einem Ende eines der beiden Hohlräume(115,116) vorgesehen ist, während die beiden von der Einleitstelle(118,122) entfernten Enden der beiden Hohlräume(115,116) miteinander verbunden sind (Verbindungskanal 119).

15. Kunststoffteil nach Anspruch 14, **dadurch gekennzeichnet**, daß die Einleitstelle(123) des gasförmigen Mediums an oder in der Nähe der Verbindungsstelle(119) der beiden Hohlräume(115,116) vorgesehen ist.

16. Kunststoffteil nach einem der vorhergehenden Ansprüche, **dadurch gekennzeichnet**, daß zum Bilden der Hohlraum-Abschnitt obere und untere Dickstellen vorgesehen sind, von denen die obere Dickstelle(111,113) einen kleineren Querschnitt als die untere Dickstelle(112,114) aufweist.

17. Kunststoffteil nach Anspruch 16, **dadurch gekennzeichnet**, daß die Einleitstelle(118,122,123) für das gasförmige Medium im Bereich der dünneren Dickstelle(111,113) und damit des im Querschnitt kleineren Hohlraumes(115) liegt.

18. Kunststoffteil nach einem der vorhergehenden Ansprüche, **dadurch gekennzeichnet**, daß die an die Hohlräume(115,116) der Dickstellen anschließenden Dünnstellen(117) in ihrem freien Querschnitt so ausgelegt sind, daß ein unbeabsichtigtes Durchtreten des gasförmigen Mediums ausgeschlossen ist.

19. Kunststoffteil nach Anspruch 18, **dadurch gekennzeichnet**, daß der freie Querschnitt der an Hohlräume(115,116) anschließenden Düunstellen(117) eine lichte Weite von etwa 1,8 bis 2,0 mm aufweist.

20. Kunststoffteil nach einem der vorhergehenden Ansprüche, **dadurch gekennzeichnet**, daß die untere, mit einem Hohlraum(116) versehene Dickstelle(112) von den beiden Enden her bogenförmig nach unten verläuft.

21. Kunststoffteil, insbesondere Kunststoffkasten zum Transport von Getränkeflaschen mit wenigstens einer Grifföffnung und einem darüber angeordneten Handgriff, der durch gleichzeitiges Einspritzen von flüssigem Kunststoff von beiden Enden her gebildet wird, nach einem der vorhergehenden Ansprüche, **dadurch gekennzeichnet**, daß die beiden Strömungskanäle zum Einleiten des Kunststoffes in den Handgriff(204,224) unterschiedliche freie Querschnitte aufweisen.

22. Kunststoffteil nach Anspruch 21, **dadurch gekennzeichnet**, daß der Handgriff(204) zwei übereinander liegende Dickstellenbereiche(208,209) aufweist, die sich jeweils über den gesamten Handgriff(204) erstrecken und die beide von den beiden Enden des Handgriffs her mit flüssigem Kunststoff versorgt werden, und daß die Strömungskanäle der beiden Dickstellenbereiche(208,209) mit unterschiedlichen freien Querschnitten (Querschnittsverjüngungen 206,207) versehen sind.

23. Kunststoffteil nach Anspruch 22, **dadurch gekennzeichnet**, daß die unterschiedlichen freien Querschnitte (Querschnittsverjüngungen 206,207) bei den beiden Dickstellenbereichen(208,209) auf unterschiedlichen Seiten des Handgriffs(204) vorgesehen sind.

24. Kunststoffteil nach einem der vorhergehenden Ansprüche, **dadurch gekennzeichnet**, daß der Handgriff mit einem durch Gasinjection gebildeten Hohlraum(12,13) versehen ist, der sich über wenigstens annähernd die gesamte Länge des Handgriffs(4) erstreckt.

25. Kunststoffteil nach Anspruch 24, mit zwei übereinander angeordneten Dickstellenbereichen(208,209), **dadurch gekennzeichnet**, daß wenigstens einer der beiden Dickstellenbereiche(208,209) mit einem durch Gasinjection erzeugten Hohlraum(212,213) versehen ist, wobei in beiden Dickstellenbereichen(208,209) die Zusammentreffstellen(210,211) der Materialströme gegeneinander verschoben sind.

26. Kunststoffteil nach einem der vorhergehenden Ansprüche, **dadurch gekennzeichnet**, daß Entlüftungsöffnungen in der Spritzform vorgesehen sind, die vorzugsweise entsprechend den Zusammentreffstellen(210,211) der Materialströme zueinander versetzt angeordnet sind.

27. Verfahren zum Herstellen eines Kunststoffteils nach einem der vorhergehenden Ansprüche, **dadurch gekennzeichnet**, daß während der Abkühlphase des Kunststoffes und der damit einhergehenden Schrumpfung des Kunststoffes weiteres gasförmiges Medium eingepreßt wird, um den Schrumpf auszugleichen.

28. Verfahren nach Anspruch 27, **dadurch gekennzeichnet**, daß der Gasdruck während nahezu der gesamten Abkühlphase des Kunststoffes aufrechterhalten wird.

## Claims

1. Plastic part manufactured by the injection-moulding process, particularly the handle (6, 7, 55, 99, 100, 204, 224) of a bottle crate (1, 50, 91, 201, 221), with a cavity produced by gas injection, with at least two essentially horizontal cavity sections (8, 9, 31, 32, 33, 56, 57, 58, 115, 116, 208, 209, 229) located above each other, the lower of the cavity sections representing the lower limit of the plastic part, **wherein** the cavity sections located above each other are connected by a section of solid material (solid link element) which varies in its cross-section as it extends between the cavity sections, the solid link element (10, 22, 34, 35, 59, 60, 117) being thinnest in its central section between the two cavity sections and becoming thicker towards the two cavity sections.

2. Plastic part according to claim 1, **wherein** the link element (10, 22, 117) - looked at in cross-section - is essentially straight on one of its two vertical edges and has a concave shape at its opposite edge (12).

3. Plastic part according to claim 2, **wherein** the concave edge (12) has a consistent radius of curvature.

4. Plastic part according to one of the previous claims, **wherein** the link element (22, 34, 35, 59, 60) is provided with a groove (23, 36, 37, 61, 62) which extends parallel to the cavity sections (8, 9, 31, 32, 33, 56, 57, 58), this groove being produced by a knife-like part that projects out of the injection mould.

5. Plastic part according to claim 4, **wherein** the transition areas from the groove (23, 37, 61, 62) to the adjacent link element sections are rounded off.

6. Plastic part according to claim 4, **wherein** the groove (23, 36, 37, 61, 62) is closed off in the finished plastic part, the closing operation being carried out after the injection operation by melting the edges surrounding the groove.

7. Plastic part according to one of the claims 4, 5, or 6, **wherein** the two cavities (8, 9, 31, 32, 33, 56, 57, 58, 115, 116, 208, 209) located above each other are connected to each other at least at one end by a vertical channel.

8. Plastic part according to one of the previous claims, particularly a bottle crate with two narrow sides and two long sides that is provided with handles on all four sides, **wherein** pairs of handles located opposite each other on the narrow sides with two cavities (8, 9) located above each other and a solid link element (10, 22) positioned between them are provided, while handles are provided on the two long sides which have cavities (31, 32, 33) located close together, between which link elements (34, 35) divided up by grooves (36, 37) are provided.

9. Plastic part according to claim 8, **wherein** at least the cavities (31, 32, 33) located close together in the long side handles are connected to each other laterally by vertical channels.

10. Plastic part according to claim 8 or 9, **wherein** the grooves (23, 36, 37) dividing up the link elements (22, 34, 35) are closed off in the finished plastic part, the closing operation being carried out after injection of the bottle crate (1) by re-melting the material surrounding the groove.

11. Plastic part according to one of the previous claims, **wherein** an accumulation of material (38, 63, 64) is provided in at least one of the areas of the two wall sections (34, 35, 59, 60) that are facing each other.

12. Plastic part according to claim 11, **wherein** an accumulation of material (63, 64) pointing away from the wall sections is provided in each of both the areas of the two wall sections (59, 60) that are facing each other.

13. Plastic part according to claim 11 or 12, **wherein** the material accumulation (63, 64) is provided in a recess (65, 66) provided in the wall section.

14. Plastic part according to one of the previous claims, **wherein** the entry point (118, 122) for the gaseous medium is provided at one end of one of the two cavities (115, 116), while the two ends of the two cavities (115, 116) opposite the entry point (118, 122) are connected to each other (connection channel 119).

15. Plastic part according to claim 14, **wherein** the entry point (123) for the gaseous medium is provided at or close to the point (119) where the two cavities (115, 116) connect to each other.

16. Plastic part according to one of the previous claims, **wherein** upper and lower thick points are provided to form the cavity section, the upper thick point (111, 113) having a smaller cross-section than the lower thick point (112, 114).

17. Plastic part according to claim 16, **wherein** the entry point (118, 122, 123) for the gaseous medium is in the area of the thinner thick point (111, 113) and thus of the cavity (115) with the smaller cross-section.

18. Plastic part according to one of the previous claims, **wherein** the thin points (117) adjacent to the cavities (115, 116) of the thick points are designed in such a way in their free cross-section that unintentional penetration of the gaseous medium is out of the question.

19. Plastic part according to claim 18, **wherein** the free cross-section of the thin points (117) adjacent to cavities (115, 116) has a clear width of about 1.8 to 2.0 mm.

20. Plastic part according to one of the previous claims, **wherein** the lower thick point (112) provided with a cavity (116) extends downwards in a curve from both ends.

21. Plastic part, particularly a plastic crate for transporting beverage bottles with at least one hand hole and a handle located above it which is formed by simultaneous injection of liquid plastic from both ends, according to one of the previous claims, **wherein** the two flow channels for feeding the plastic into the handle (204, 224) have different free cross-sections.

22. Plastic part according to claim 21, **wherein** the handle (204) has two thick areas (208, 209) located above each other, each of which extends across the entire handle (204) and both of which are supplied with liquid plastic from both ends of the handle, and **wherein** the flow channels of both the thick areas (208, 209) are provided with different free cross-sections (cross-section tapering 206, 207).

23. Plastic part according to claim 22, **wherein** the different free cross-sections (cross-section tapering 206, 207) in the two thick areas (208, 209) are provided on different sides of the handle (204).

24. Plastic part according to one of the previous claims, **wherein** the handle is provided with a cavity (12, 13) formed by gas injection that extends across at least approximately the entire length of the handle (4).

25. Plastic part according to claim 24, with two thick areas (208, 209) located above each other, **wherein** at least one of the two thick areas (208, 209) is provided with a cavity (212, 213) produced by gas injection, the points (210, 211) where the material flows meet in both thick areas (208, 209) being offset in relation to each other.

26. Plastic part according to one of the previous claims, **wherein** vents are provided in the injection mould that are preferably located offset in relation to each other corresponding to the points (210, 211) where the material flows meet.

27. Process for manufacturing a plastic part according to one of the previous claims, **wherein** further gaseous medium is forced in during the plastic cooling-off phase and the plastic shrinkage that this involves, in order to compensate for the shrinkage.

28. Process according to claim 27, **wherein** the gas pressure level is maintained during almost the entire plastic cooling-off phase.

## Revendications

1. Pièce en matière plastique fabriquée par moulage par injection, notamment une poignée (6, 7, 55, 99, 100, 204, 224) d'un casier à bouteilles (1, 50, 91, 201, 221), avec un espace creux créé par soufflage de gaz, avec au moins deux sections d'espace creux (8, 9, 31, 32, 33, 56, 57, 58, 115, 116, 208, 209, 229) placées l'une au-dessus de l'autre s'étendant de façon essentiellement horizontale, la section d'espace creux inférieure représentant la limite inférieure de la pièce en matière plastique, **caractérisée en ce que** les sections d'espace creux placées l'une au dessus de l'autre sont raccordées entre elles au moyen d'un segment en matériau massif (nervure massive), laquelle présente différentes sections entre les sections d'espace creux le long de son étendue , la nervure massive (10, 22, 34, 35, 59, 60, 117) étant la plus mince dans sa partie centrale entre les deux sections d'espace creux et étant plus épaisse en direction des deux sections d'espace creux.

2. Pièce en matière plastique selon la revendication 1, **caractérisée en ce que** la nervure (10, 22, 117), vue en coupe, est essentiellement droite sur l'un de ses deux bords verticaux et concave sur son bord (12) opposé.

3. Pièce en matière plastique selon la revendication 2, **caractérisée en ce que** le bord (12) concave est muni d'un rayon de courbure constant.

4. Pièce en matière plastique selon l'une des revendications précédentes, **caractérisée en ce que** la nervure (22, 34, 35, 59, 60) est munie d'une rainure (23, 36, 37, 61, 62) parallèle aux sections d'espace creux (8, 9, 31, 32, 33, 56, 57, 58), la rainure étant créée par une pièce en forme de lame dépassant du moule à injection.

5. Pièce en matière plastique selon la revendication 4, **caractérisée en ce que** les passages de la rainure (23, 37, 61, 62) aux sections de nervure adjacentes sont arrondies.

6. Pièce en matière plastique selon la revendication 4, **caractérisée en ce que** la rainure (23, 36, 37, 61, 62) est fermée sur la pièce en plastique finie, la fermeture étant réalisée par fusion des bords l'entourant à la suite du procédé de moulage par injection.

7. Pièce en matière plastique selon l'une des revendications 4, 5 ou 6, **caractérisée en ce que** les deux espaces creux placés l'un sur l'autre (8, 9, 31, 32, 33, 56, 57, 58, 115, 116, 208, 209) sont raccordés l'un à l'autre par un canal vertical au moins à une extrémité.

8. Pièce en matière plastique selon l'une des revendications précédentes, notamment un casier à bouteilles avec deux côtés étroits et deux côtés longitudinaux, avec des poignées prévues sur les quatre côtés, **caractérisée en ce que** deux poignées opposées et placées sur les deux côtés étroits sont respectivement prévues avec deux espaces creux (8, 9) placés l'un au-dessus de l'autre et une nervure massive (10, 22) située entre les deux espaces, alors que sur les deux côtés longitudinaux des poignées sont prévues présentant des espaces creux (31 , 32, 33) placés étroitement les uns contre les autres, entre lesquels sont prévues des nervures (34, 35) séparées par des rainures (36, 37).

9. Pièce en matière plastique selon la revendication 8, **caractérisée en ce qu'**au moins les espaces creux (31, 32, 33) placés étroitement les uns contre les autres sont raccordés entre eux latéralement par des canaux verticaux dans les poignées des côtés longitudinaux.

10. Pièce en matière plastique selon la revendication 8 ou 9, **caractérisée en ce que** les rainures (23, 36, 37) séparant les nervures (22, 34, 35) sont fermées sur la pièce finie en matière plastique, la fermeture étant réalisée après le moulage par injection du casier à bouteilles (1) par une autre fusion du matériau entourant la rainure.

11. Pièce en matière plastique selon l'une des revendications précédentes, **caractérisée en ce qu'**une accumulation de matériau (38, 63, 64) est prévue sur au moins l'une des parties tournées l'une vers l'autre et limitant la rainure des deux sections de parois (59, 60).

12. Pièce en matière plastique selon la revendication 11, **caractérisée en ce qu'**une accumulation de matériau (63, 64) détournée des sections de paroi est respectivement prévue sur les deux parties des deux sections de paroi (59, 60) tournées l'une vers l'autre.

13. Pièce en matière plastique selon la revendication 11 ou 12, **caractérisée en ce que** l'accumulation de matériau (63, 64) est prévue dans un creux (65, 66) prévu dans la partie de la paroi.

14. Pièce en matière plastique selon l'une des revendications précédentes, **caractérisée en ce que** le point d'introduction (118, 122) du produit gazeux est prévu à une extrémité de l'un des deux espaces creux (115, 116) alors que les deux extrémités éloignées du point d'introduction (118, 122) des deux espaces creux (115, 116) sont raccordées entre elles (canal de liaison 119).

15. Pièce en matière plastique selon la revendication 14, **caractérisée en ce que** le point d'introduction (123) du produit gazeux est prévu sur ou à proximité du point de liaison (119) des deux espaces creux (115, 116).

16. Pièce en matière plastique selon l'une des revendications précédentes, **caractérisée en ce que** des points d'épaississement inférieurs et supérieurs sont prévus pour former la section d'espace creux, le point supérieur (111, 113) présentant une section plus petite que le point inférieur (112, 114).

17. Pièce en matière plastique selon la revendication 16, **caractérisée en ce que** le point d'introduction (118, 122, 123) pour le produit gazeux se trouve dans la partie du point d'épaississement le plus mince (111, 113) et donc dans la partie de l'espace creux (115) de section plus petite.

18. Pièce en matière plastique selon l'une des revendications précédentes, **caractérisée en ce que** les points minces (117) adjacents aux espaces creux (115, 116) des points d'épaississement ont une section libre conçue de telle sorte qu'un passage involontaire du produit gazeux est exclu.

19. Pièce en matière plastique selon la revendication 18, **caractérisée en ce que** la section libre des points minces (117) adjacents aux espaces creux (115, 116) présente un diamètre intérieur d'environ 1,8 à 2 mm.

20. Pièce en matière plastique selon l'une des revendications précédentes, **caractérisée en ce que** le point d'épaississement (112) inférieur muni d'un espace creux (116) est en forme d'arc vers le bas à partir des deux extrémités.

21. Pièce en matière plastique, notamment caisse en matière plastique pour le transport de bouteilles de boissons avec au moins une ouverture de prise et une poignée placée au-dessus d'elle, formée par moulage par injection simultané d'un plastique liquide à partir des deux extrémités, selon l'une des revendications précédentes, **caractérisée en ce que** les deux canaux d'écoulement pour introduire la matière plastique présentent des sections libres différentes dans la poignée (204, 224).

22. Pièce en matière plastique selon la revendication 21, **caractérisée en ce que** la poignée (204) présente deux parties de points d'épaississement (208, 209) placées l'une au-dessus de l'autre et s'étendant chacune sur toute la poignée (204) et alimentées toutes deux par les deux extrémités de la poignée avec de la matière plastique liquide, et en ce que les canaux d'écoulement des deux parties d'épaississement (208, 209) sont munies de sections libres différentes (rétrécissements de sections 206, 207).

23. Pièce en matière plastique selon la revendication 22, **caractérisée en ce que** les différentes sections libres (rétrécissements de sections 206, 207) sont prévues dans les deux parties de points d'épaississement ( 208, 209) sur différents côtés de la poignée (204).

24. Pièce en matière plastique selon l'une des revendications précédentes, **caractérisée en ce que** la poignée est munie d'un espace creux (12, 13) formé par injection de gaz et s'étendant sur au moins presque toute la longueur de la poignée (4).

25. Pièce en matière plastique selon la revendication 24, avec deux parties d'épaississement (208, 209) placées l'une au-dessus de l'autre, **caractérisée en ce qu'**au moins l'une des deux parties d'épaississement (208, 209) est munie d'un espace creux (212, 213) créé par injection de gaz, les points de rencontre (210, 211) des flux de matériau étant déplacés l'un contre l'autre dans les deux parties de points d'épaississement (208, 209).

26. Pièce en matière plastique selon l'une des revendications précédentes, **caractérisée en ce que** des ouvertures d'aération sont prévues dans le moule a injection et placées de préférence de façon correspondante aux points de rencontre (210, 211) des flux de matériau de manière décalée.

27. Procédé pour fabriquer une pièce en matière plastique selon l'une des revendications précédentes, **caractérisé en ce que** pendant la phase de refroidissement de la matière plastique et de la contraction de la matière plastique qui en résulte, du produit gazeux supplémentaire est injecté pour compenser la rétraction.

28. Procédé selon la revendication 27, **caractérisé en ce que** la pression de gaz est maintenue pendant presque toute la phase de refroidissement de la matière plastique.
